(19) **Europäisches Patentamt**

**European Patent Office**

**Office européen des brevets**

(11) **EP 0 568 694 B1**

(12) **FASCICULE DE BREVET EUROPEEN**

(45) Date de publication et mention
de la délivrance du brevet:
**21.06.2000 Bulletin 2000/25**

(51) Int. Cl.[7]: **G06T 7/20**

(21) Numéro de dépôt: **93901761.2**

(22) Date de dépôt: **24.11.1992**

(86) Numéro de dépôt international:
**PCT/FR92/01086**

(87) Numéro de publication internationale:
**WO 93/11502 (10.06.1993 Gazette 1993/14)**

(54) **PROCEDE D'ESTIMATION ET DE CODAGE HIERARCHISE DU MOUVEMENT DE SEQUENCES D'IMAGES**

VERFAHREN ZUR SCHAETZUNG UND HIERARCHISCHEN KODIERUNG VON BEWEGUNG IN BILDFOLGEN

METHOD FOR ESTIMATING AND HIERARCHICALLY CODING IMAGE SEQUENCE MOTION

(84) Etats contractants désignés:
**AT BE CH DE ES FR GB IT LI NL**

(30) Priorité: **27.11.1991 FR 9114625**

(43) Date de publication de la demande:
**10.11.1993 Bulletin 1993/45**

(73) Titulaire: **THOMSON multimedia
92648 Boulogne Cédex (FR)**

(72) Inventeurs:
• **GUILLOTEL, Philippe
F-92402 Courbevoie (FR)**
• **BOURDON, François
F-92402 Courbevoie (FR)**

(74) Mandataire:
**Ruellan-Lemonnier, Brigitte et al
THOMSON multimedia,
46 quai A. Le Gallo
92648 Boulogne Cédex (FR)**

(56) Documents cités:
**EP-A- 0 293 644          WO-A-91/03797**

• **IEEE TRANSACTIONS ON PATTERN ANALYSIS AND MACHINE INTELLIGENCE vol. 11, no. 7, Juillet 1989, NEW YORK, US pages 742 - 748 P. STROBACH 'Quadtree-Structured Linear Prediction Models for Image Sequence Processing'**

## Description

La présente invention concerne un procédé d'estimation et de codage hiérarchisé du mouvement de séquences d'images utilisé notamment dans les chaînes de transmission d'images en vue de réduire le débit d'informations.

On a proposé, dans la demande de brevet français N°89 11328 déposée au nom de THOMSON CONSUMER ELECTRONICS, un procédé et un dispositif d'estimation et de codage hiérarchisé du mouvement de séquences d'images. Ce procédé est caractérisé en ce qu'il consiste, à un premier niveau, à découper l'image courante en macroblocs $2^{p+1}.2^{p+1}$ pixels et à déterminer un premier champ de vecteurs-mouvement associé à cette partition en macroblocs en utilisant un algorithme d'estimation itératif et récursif initialisé par des vecteurs-mouvement estimés pour l'image précédente, puis, à un deuxième niveau à découper en quadrants chacun des macroblocs et à déterminer, pour les blocs qui en résultent, un second champ de vecteurs-mouvement en utilisant le même algorithme d'estimation mais initialisé par des vecteurs du champ de mouvement estimé au niveau précédent, puis, à un $i^{\text{ème}}$ niveau, i = 3 à p, à découper chacun des blocs considérés au niveau i-1 en quadrants et à déterminer, pour les blocs qui en résultent, un $i^{\text{ème}}$ champ de vecteurs-mouvement en utilisant le même algorithme d'estimation initialisé par des vecteurs du champ de mouvement estimés au niveau précédent, les blocs de taille minimale étant des blocs de $2^{l+1}.2^{l+1}$ pixels et à déterminer un champ de vecteurs-mouvement final à partir des p champs de vecteurs-mouvement résultants en choisissant le niveau de partition le moins élevé pour lequel le vecteur-mouvement associé au bloc correspondant conduit à la minimisation d'un critère traduisant les différences de luminance entre blocs se correspondant dans les images successives par les vecteurs de déplacement estimés.

Cette méthode d'estimation permet d'augmenter la convergence de l'algorithme d'estimation de mouvement récursif utilisé et permet d'adapter au mieux l'algorithme d'estimation de mouvement au codage de type "Quadtree" qui sera fait ultérieurement du champ de mouvement résultant.

Cette méthode d'estimation peut être utilisée, entre autre, dans le cadre du HD-MAC.

La présente invention a pour but d'apporter différents perfectionnements au procédé d'estimation et de codage hiérarchisé du mouvement de séquences d'images décrit dans la demande de brevet français N°89 11328.

En conséquence, la présente invention a pour objet un procédé d'estimation et de codage hiérarchisé du mouvement de séquences d'images tel que revendiqué dans la revendication 1.

Cette nouvelle détermination du champ de vecteurs-mouvement final permet de simplifier le système, notamment au niveau de sa réalisation, et d'assurer une meilleure convergence des calculs.

D'autres caractéristiques et avantages de la présente invention apparaîtront à la lecture de la description faite ci-après de divers modes de réalisation, cette description étant faite avec référence aux figures ci-annexées dans lesquelles :

- la figure 1 illustre les informations utilisées pour estimer un champ de mouvement selon l'invention, dans le cas d'un bloc courant ;
- la figure 2 illustre le calcul des gradients conformément à la présente invention ;
- la figure 3 illustre les informations utilisées pour estimer un champ de mouvement dans le cas de blocs se trouvant près du bord de l'image ou de la trame ;
- la figure 4 illustre la décomposition d'un macrobloc en blocs plus petits suivant cinq niveaux hiérarchisés ;
- la figure 5 est un organigramme détaillant les différentes étapes du procédé de la présente invention ;
- la figure 6 détaille les étapes de l'estimation de mouvement à un niveau donné selon un premier mode de réalisation de la présente invention, et
- la figure 7 détaille les étapes de l'estimation de mouvement à un niveau donné selon un autre mode de réalisation de la présente invention.

On décrira tout d'abord un type d'algorithme d'estimation de mouvement qui peut être utilisé dans le cadre de la présente invention. Cet algorithme est dérivé de l'algorithme spatiotemporel décrit notamment par A.N. Netravali et J.D Robbins dans un article intitulé "Motion compensated television coding part.1" tiré de "The Bell system technical journal" volume 58, N°3, March 1979.

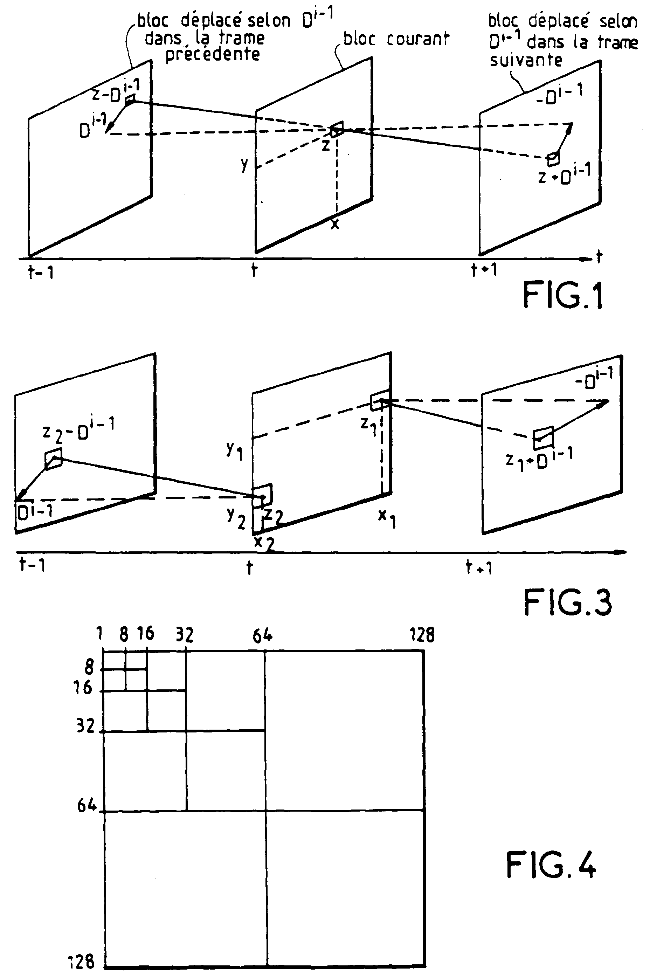

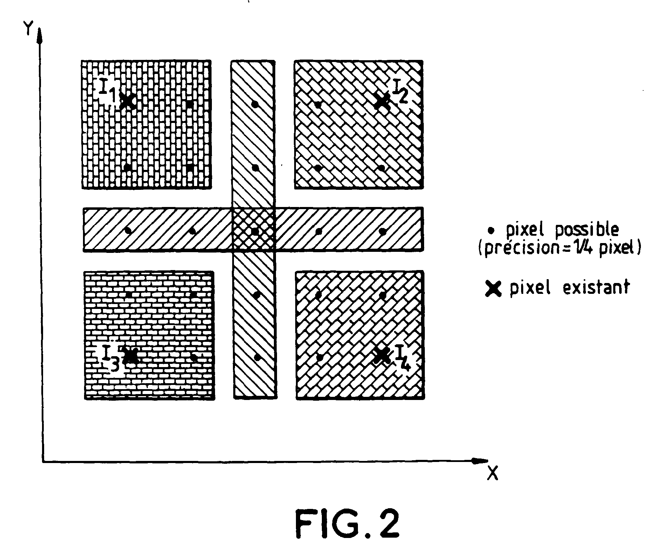

L'algorithme de la présente invention permet une estimation de mouvement dite "symétrique". Une estimation symétrique est utilisée principalement pour les blocs courants se trouvant au milieu d'une trame ou image comme représenté sur la figure 1. Dans ce cas, l'estimation de mouvement des blocs de la trame courante à l'itération i est faite en utilisant la trame précédente se produisant à l'instant t-1 et la trame suivante se produisant à l'instant t+1. Les gradients sont aussi calculés dans les trames précédentes et suivantes et le vecteur de déplacement à l'itération i est alors calculé à partir du vecteur déplacement du bloc courant estimé à l'itération précédente i-1 par les équations suivantes (qui tiennent compte des différences de luminance entre les pixels du bloc courant et les pixels des blocs correspondants, déplacés de ce vecteur estimé précédemment, d'une part dans la trame précédente et d'autre part dans la trame

suivante) :

$$D_x^i = D_x^{i-1} - \frac{\sum\left[DFD(z-D^{i-1},t-1)sg(grad^x(z-D^{i-1},t-1))-DFD(z+D^{i-1},t+1)sg(grad^x(z+D^{i-1},t+1))\right]}{\sum\left[grad^x(z-D^{i-1},t-1)+grad^x(z+D^{i-1},t+1)\right]}$$

$$(1)$$

$$D_y^i = D_y^{i-1} - \frac{\sum\left[DFD(z-D^{i-1},t-1).sg(grad^y(z-D^{i-1},t-1))-DFD(z+D^{i-1},t+1)sg(grad^y(z+D^{i-1},t+1))\right]}{\sum\left[grad^y(z-D^{i-1},t-1)+grad^y(z+D^{i-1},t+1)\right]}$$

dans laquelle :

- $D_x^i$ et $D_y^i$ ainsi que $D_x^{i-}$ et $D_y^{i-}$ sont respectivement les composantes horizontales et verticales des vecteurs-mouvement $D^i$ et $D^{i-1}$ pour un bloc de pixels respectivement à l'itération i et à l'itération précédente i-1 ;
- DFD $(z-D^{i-1}, t-1)$ correspond à la différence inter-trame déplacée pour le pixel z, c'est-à-dire la différence entre la luminance du pixel z dans la trame courante à l'instant t et la luminance du pixel déplacé correspondant à z dans la trame précédente (à l'instant t-i), c'est-à-dire z déplacé du vecteur-mouvement $D^{i-1}$ calculé à l'itération précédente :

$$DFD(z-D^{i-1}, t-1) = I(z, t) - I(z - D^{i-1}, t-1) \text{ où } I(z, t)$$

représente la valeur de luminance d'un pixel z à l'instant T - $DFD(z+D^{i-1}, t+1)$ représente la différence inter-trame déplacée pour le pixel z, c'est-à-dire la différence entre la luminance du pixel z à la trame courante à l'instant t et la luminance du pixel déplacé correspondant à z dans la trame suivante (à l'instant t+1), c'est-à-dire à z déplacé du vecteur-mouvement symétrique $D^{i-1}$ calculé à l'itération précédente ;
- $grad.^x(z - D^{i-1}, t-1)$, $grad.^x(z + D^{i-1}, t+1)$,
  $grad.^y(z - D^{i-1}, t-1)$, $grad.^y(z + D^{i-1}, t+1)$
  représentent les composantes respectivement horizontales et verticales du gradient de luminance des pixels déplacés, calculées respectivement dans la trame précédente et dans la trame suivante,
- et où sg (...) est la notation pour "signe de" la quantité qui suit.

Sur la figure 1, on a représenté la position des blocs déplacés dans la trame précédente et dans la trame suivante, correspondant à un bloc courant se trouvant au milieu de l'image pour lequel le vecteur déplacement estimé à l'itération précédente est $D^{i-1}$ de la trame précédente à la trame courante et donc $-D^{i-1}$ de la trame suivante à la trame courante, en supposant un déplacement symétrique.

Si l'on examine un détail du voisinage de $z - D^{i-1}$ ou $z + D^{i-1}$, on voit que, en général, le vecteur déplacement conduit à un pixel déplacé $z - D^{i-1}$ ou $z + D^{i-1}$ ayant une position qui ne correspond pas à des valeurs entières de x et y. En conséquence, on utilise les valeurs de luminance des quatres points du voisinage de $z-D^{i-1}$ ou $z+D^{i-1}$, à savoir les points I1, I2, I3 et I4 comme représenté sur la figure 2, pour le calcul des luminances des pixels déplacés et pour le calcul des gradients.

Dans ce cas, l'interpolation de la luminance I est réalisée en effectuant une somme pondérée de I1, I2, I3 et I4.

Pour le gradient, on utilise, conformément à la présente invention, des formules plus complexes, prenant en compte la position du pixel déplacé $Z-D^{i-1}$ ou $Z+D^{i+1}$ par rapport aux points I1, I2, I3 et I4, comme représenté sur la figure 2.

Si les calculs sont réalisés avec une précision au quart de pixels, les pixels déplacés peuvent avoir, entre les pixels existants I1, I2, I3, I4, un certain nombre de positions telles que représentées par des points sur la figure 2. Suivant la position du pixel déplacé par rapport au pixel existant, des formules différentes seront utilisées pour le calcul des gradients en x et en y.

Ainsi, si le pixel déplacé se trouve dans le voisinage de I1, la valeur du gradient est donnée :

Gx = (I2 - I1) et Gy= (I1 - I3).
Si le pixel déplacé se trouve dans le voisinage de I2 :
Gx = (I2 - I1) et Gy = (I2 - I4).
Si le pixel déplacé se trouve dans le voisinage de I3 :

Gx = (I4 - I3) et Gy = (I1 - I3).

Si le pixel déplacé se trouve dans le voisinage de I4 :

Gx = (I4 - I3) et Gy = (I2 - I4).

Si le pixel déplacé se trouve dans la partie médiane entre I1 et I3 ou entre $I_2$ et $I_4$ :

Gx = ((I2 - I1) + (I4 - I3))/2 et Gy = (I1 - I3) ou (I2 - I4).

Si le pixel déplacé se trouve dans la partie médiane entre I1 et I2 ou entre $I_4$ et $I_3$ :

Gx = (I2 - I1) ou (I4 - I3), Gy = ((I1 - I3) + (I2 - I4))/2

Si le pixel déplacé est équidistant de I1, I2, I3, I4 :

Gx = ((I2 - I1) + (I4 - I3))/2

Gy = ((I1 - I3) + (I2 - I4))/2

Gx et Gy dans les équations ci-dessus correspondent en fait à grad.$^x$(Z-D$^{i-1}$, t - 1) et grad.$^y$(Z-D$^{i-1}$, t - 1) avec I1, I2, I3 et I4 à t - 1, de même pour (Z+D$^{i-1}$, t+1).

Toutefois, dans le cas des blocs des bords de l'image, il n'est pas toujours possible de réaliser une estimation symétrique. Un vecteur calculé peut très bien pointer en dehors de l'image sur l'une des deux trames adjacentes à la trame courante. Ainsi, comme représenté sur la figure 3, le pixel Z2 d'un bloc se trouvant sur le bord gauche de l'image pointe en dehors de la trame suivante t + 1 tandis que le pixel Z1 appartenant à un bloc du bord droit de l'image pointe en dehors de la trame précédente se produisant à l'instant t-1. Dans ce cas, afin de disposer de prédicteurs pour les niveaux inférieurs, on réalise une estimation de mouvement non symétrique, c'est-à-dire une estimation de mouvement entre la trame courante et la trame suivante ou entre la trame courante et la trame précédente. Les différences de luminance entre blocs ou DFD et les gradients sont calculés sur une seule trame et mis à zéro ou à la même valeur pour l'autre trame afin de pouvoir utiliser le même type d'équation que les équations (1) ci- dessus et conserver la même architecture générale du système.

L'algorithme d'estimation de mouvement récursif tel que décrit ci-dessus est donc utilisé dans le procédé d'estimation et de codage hiérarchisé du mouvement de séquences d'images conforme à la présente invention. Pour adapter au mieux cet algorithme d'estimation de mouvement au codage de type "quadtree" qui sera fait ultérieurement du champ de mouvement résultant, les blocs d'un niveau sont le résultat du partage en quatre d'un bloc du niveau immédiatement supérieur, comme représenté sur la figure 3 qui illustre les différentes tailles de blocs résultant de la partition. De plus, la récursivité est obtenue en utilisant le champ de mouvement obtenu à un niveau donné de la hiérarchie pour calculer le champ de mouvement du niveau immédiatement inférieur. Ainsi, pour les calculs à l'intérieur d'un niveau donné, l'estimation de mouvement pour un bloc est indépendante de celle des autres blocs du voisinage au même niveau.

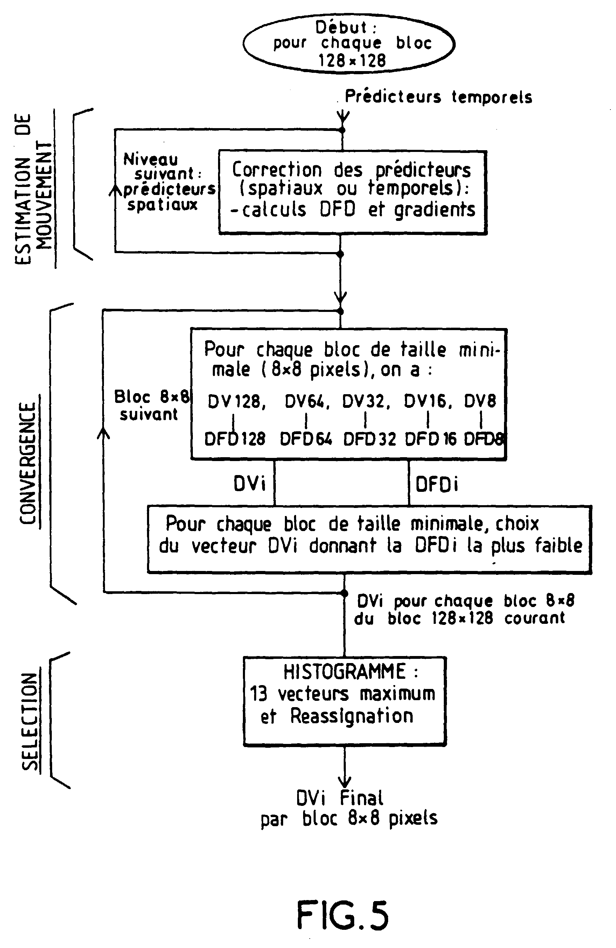

On décrira maintenant, avec référence, plus particulièrement à la figure 5, les principales étapes du procédé d'estimation et de codage hiérarchisé du mouvement de séquences d'images conforme à la présente invention. Ces différentes étapes peuvent être mises en oeuvre avec un estimateur de mouvement BRH (pour blocs récursifs hiérarchiques). Les principales étapes du procédé conforme à la présente invention comportent tout d'abord une étape d'estimation de mouvement qui se répète pour les n niveaux suivie d'une étape de convergence qui donne un champ de vecteurs-mouvement final et se terminent enfin par une étape de sélection, cette étape de sélection étant en fait optionnelle suivant l'application concernée.

On décrira l'étape d'estimation de mouvement, à savoir, la première étape de la figure 5, selon différents modes de réalisation de l'invention.

La taille maximale des blocs d'éléments d'images reconnue pour le codage étant de 128 x 128 pixels et la taille minimale, dans le mode de réalisation représenté, de 8 x 8 pixels mais pouvant aller jusqu'au pixel par partage successifs de chaque bloc en 4 quadrants, le calcul des vecteurs déplacement est effectué selon l'invention d'abord pour les blocs de 128.128 pixels (niveau 1) puis de 64.64 pixels (niveau 2), puis de 32.32 pixels (niveau 3), puis de 16.16 pixels (niveau 4) et enfin de 8.8 pixels (niveau 5), indépendamment du contenu de l'image. Pour l'initialisation pour l'image courante, les N valeurs initiales pour les blocs les plus grands au premier niveau (128.128) sont nulles pour la première image de la séquence, puis égales aux N vecteurs-mouvement les plus occurents ou prédicteurs temporels dans le même macrobloc de l'image précédente. Puis les N valeurs initiales recueillies pour un bloc de taille n.n proviennent du niveau précédent, donc d'un bloc de taille 2n.2n. Ces valeurs sont les déplacements estimés pour les N blocs les plus proches de taille supérieure. En général, N est choisi égal à 4, mais d'autres valeurs peuvent être envisagées sans sortir du cadre de la présente invention.

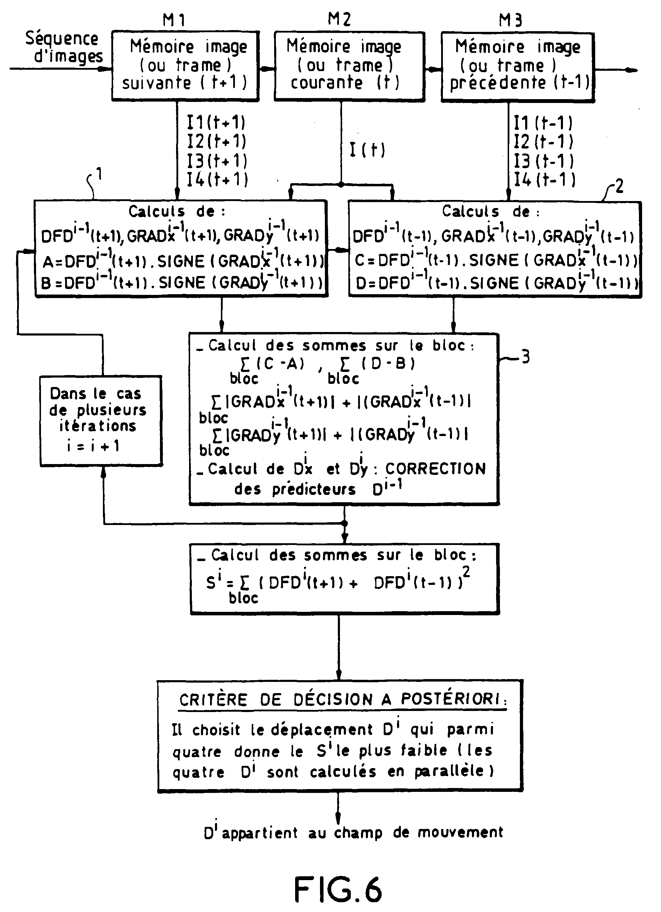

Une étape du procédé d'estimation de mouvement à un niveau n est décrite plus en détail ci-après en référence à la figure 6. Dans ce cas, on a décrit un calcul à posteriori des vecteurs déplacements. Comme représenté sur la figure 6, les séquences d'images sont mémorisées dans trois mémoires ou zones mémoires d'images ou de trames qui contiennent donc l'image suivante M1 à t+1, l'image courante M2 à l'instant t et l'image précédente M3 à l'instant t-1 ainsi que les valeurs de luminance des 4 pixels entourant le pixel déplacé $Z+D^{i-1}$ à la sortie de M1, la valeur de luminance $I(t) = I(z, t)$ à la sortie de M2 et les valeurs de luminance des 4 pixels entourant le pixel déplacé $Z-D^{i-1}$ à la sortie de M3.

Une première étape de calcul par point donne les valeurs des différences inter-trames déplacées et des gradients à partir des valeurs de luminance issues des mémoires et des vecteurs déplacement initiaux, par rapport à l'image précédente à t-1 et par rapport à l'image suivante à t+1. De manière plus spécifique, on calcule dans les blocs référencés 1 et 2 en utilisant les informations stockées dans M1 et M2 :

- $DFD^{i-1}(t+1)$, $Grad_x^{i-1}(t+1)$, $Grad_y^{i-1}(t+1)$

- $A = DFD^{i-1}(t+1).signe\ (Grad_x^{i-1}(t+1))$

- $B = DFD^{i-1}(t+1).signe\ (Grad_y^{i-1}(t+1))$
  en utilisant les informations stockées dans M2 et M3 :

- $DFD^{i-1}(t-1)$, $Grad_x^{i-}(t-1)$, $Grad_y^{i-1}(t-1)$

- $C = DFD^{i-1}(t-1).signe\ (Grad_x^{i-1}(t-1))$

- $D = DFD^{i-1}(t-1).signe\ (Grad_y^{i-1}(t-1))$

L'étape suivante consiste alors à calculer les composantes des vecteurs déplacement $D_x^i$ et $D_y^i$ selon les formules itératives données ci-dessus après avoir calculé les sommes partielles des différences telles que C-A et B-D sur l'ensemble du bloc correspondant de niveau n.

Ainsi, comme représenté sur la figure 6, l'on calcule dans le bloc 3 :

$$\sum_{bloc} (C-A),\ \sum_{bloc} (D-B)\ ,$$

$$\sum_{bloc} |Grad_x^{i-1}(t+1)| + |Grad_x^{i-1}(t-1)|$$

$$\sum_{bloc} |Grad_y^{i-1}(t+1)| + |Grad_y^{i-1}(t-1)|$$

et l'on effectue la correction des prédicteurs $D^{i-1}$.

Lorsque les N valeurs initiales pour chaque bloc courant (N étant en général choisi égal à 4) correspondant à des blocs du voisinage de ce bloc courant mais d'un niveau différent, c'est-à-dire de taille immédiatement supérieure, permettent d'initialiser 4 estimations de mouvement séparées pour ce bloc (une seule a été représentée) et donnent lorsque les formules itératives de l'algorithme ont convergé quatre valeurs de vecteurs-mouvement mis à jour, indépendantes, qui complètent les valeurs des vecteurs de niveaux précédents. Les carrés des différences intertrames DFD intermédiaires utilisés pour les mises à jour sont calculés, stockés en mémoire et additionnés pour l'ensemble du bloc de façon à choisir pour chaque bloc à l'issue des 4 calculs, le "meilleur" déplacement parmi les quatre nouveaux vecteurs de déplacement mis à jour, c'est-à-dire celui pour lequel la somme $S^i$ des différences inter-trames élevées au carré pour ce bloc est minimale. Ce meilleur vecteur constitue alors l'un des vecteurs du champ de mouvement calculé au niveau n et noté DV128 ou DV64 ou DV32 ou DV16 ou DV8 suivant le niveau d'itération.

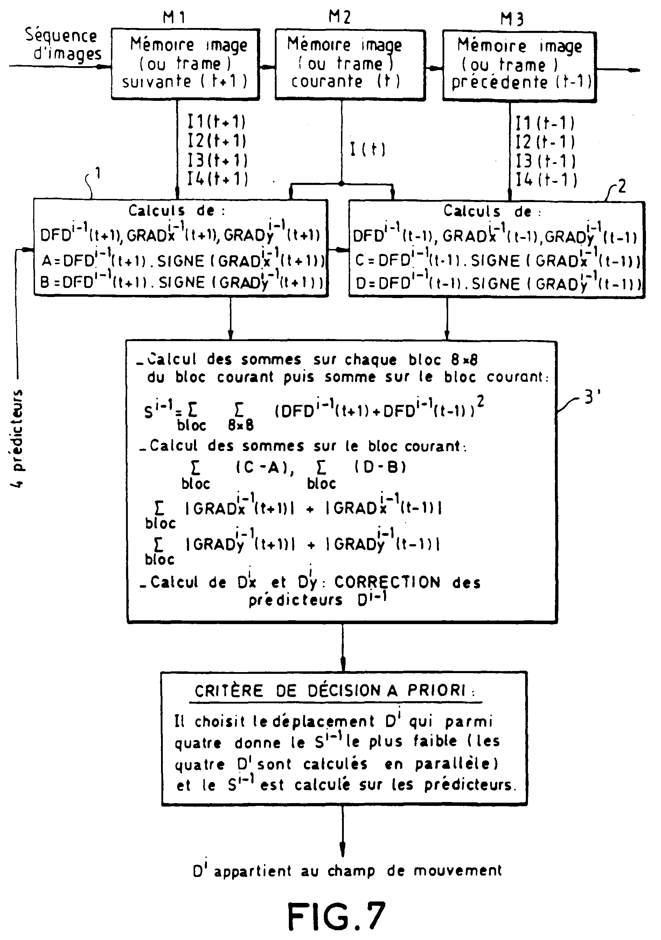

Selon un autre mode de réalisation représenté à la figure 7, on peut réaliser un calcul à priori. Dans ce cas, on applique directement sur les N valeurs initiales utilisées pour chaque bloc courant un critère de décision en utilisant un calcul de DFD et en choisissant comme vecteur celui qui donne la DFD minimale. Sur ce vecteur choisi, on réalise une correction de manière à obtenir les composantes du vecteur déplacement $D_x^i$ et $D_y^i$ avec les formules itératives données ci-dessus. De manière plus précise et comme représenté sur la figure 7, dans les blocs 1 et 2, on effectue le même calcul que dans les blocs 1 et 2 de la figure 6. Puis dans les blocs 3', on effectue le calcul des sommes sur chaque bloc 8x8 du bloc courant puis on somme sur le bloc courant, à savoir :

$$S^{i-1} = \sum_{bloc} \sum_{8x8} |DFD^{i-1}(t+1) + DFD^{i-1}(t-1)|^2$$

(DFD$^{i-1}$ étant la DFD calculées avec les vecteurs D$^{i-1}$ de même pour Grad$^{i-1}$).

Ensuite, on effectue la calcul des sommes sur le bloc courant comme dans le cas du bloc 3 de la figure 3 et le calcul de D$_x^j$ et D$_y^j$, à savoir la correction des prédicteurs D$^{i-1}$.

Dans les deux cas décrits ci-dessus, la correction du vecteur déplacement a été réalisée en utilisant un calcul de gradient. Toutefois, il est évident pour l'homme de l'art que la correction d'un vecteur mouvement peut être réalisée en effectuant une recherche du bloc d'image ayant la meilleure corrélation avec le bloc courant, à savoir un "block matching" en langue anglaise sur une fenêtre limitée, comme cela est décrit dans la littérature notamment dans les articles suivants :

- J.R Jain et A.K Jain IEEE Trans. ou Comm. COM-29 N° 121 "Displacement Measurement and its application in interframe image coding" ;
- Y.Niromiga et Y.Ohtsuk IEEE Vol COM-30 Janvier 1982 "A motion compensated interframe coding scheme for television pictures".

A l'issue de cette phase d'estimation de mouvement, qui peut être réalisée différemment comme décrit ci-dessus, un champ de vecteurs-mouvement différents correspondant à chaque niveau, c'est-à-dire à chaque taille de blocs, est disponible pour déterminer le champ de mouvement final adapté à la construction de l'arbre de codage tel qu'un arbre de codage de type "quadtree".

Une fois les cinq champs de mouvement déterminés, l'étape de convergence consiste donc à déterminer le champ de mouvement final. Conformément à la présente invention, la détermination du champ de mouvement final se fait en examinant pour chaque bloc de taille minimale, à savoir, pour chaque bloc de taille 8 x 8 pixels dans le mode de réalisation représenté, les différents vecteurs-mouvement DVI qui ont été établis à chaque niveau de partition. Ainsi, pour chaque bloc de taille minimale, on a un vecteur DV128 donnant une DFD 128 établie lors de l'initialisation du processus, à savoir au niveau i puis un vecteur DV64 donnant une DFD 64 établie au niveau 2, un vecteur DV32 donnant une DFD 32 établie au niveau 3, un vecteur DV16 donnant une DFD 16 établieau niveau 4, et un vecteur DV8 donnant une DFD 8 établitau niveau 5. Ainsi, pour ces cinq vecteurs, on compare leur DFD et on choisit le vecteur DVI donnant la DFDI la plus faible comme vecteur affecté à ce bloc de taille minimale dans le champ de vecteur-mouvement final. Cette même sélection est effectuée pour tous les blocs 8x8 d'un macrobloc, comme représenté dans la partie convergence de la figure 5.

Comme représenté sur la figure 5, le procédé conforme à la présente invention peut se terminer par une étape de sélection. Cette étape est facultative et en fait a pour but d'homogénéiser les champs de mouvement résultants et d'accroître l'efficacité d'un codage réducteur de débit. Cette étape consiste à réaliser un histogramme des vecteurs présents dans un macrobloc d'images puis à ne garder que les vecteurs majoritaires. Ainsi, on ne garde que les vecteurs-mouvement correspondant à un nombre de pics de l'histogramme supérieur à un seuil donné, ce seuil correspondant à un nombre de vecteurs-mouvement jugé suffisant. Pour les autres vecteurs, soit les vecteurs les moins fréquents, ils sont remplacés par les vecteurs de valeur les plus proches parmi les vecteurs sélectionnés de manière à effectuer une réassignation. Dans le cadre d'une application HD-MAC, cette étape de sélection n'est pas réalisée pour les images paires, mais une réassignation est effectuée sur chaque trame paire des images paires parmi les 9 blocs voisins du bloc considéré sur l'image précédente (impaire). Dans le mode de réalisation représenté à la figure 5, on a réalisé un histogramme sur 13 vecteurs au maximum, avec une réassignation.

D'autre part, il est possible d'utiliser le procédé d'estimation ci-dessus en descendant jusqu'à une taille de blocs équivalente au pixel. Dans ce cas, on utilise un algorithme d'estimation non symétrique et on ne réalise pas d'histogramme.

**Revendications**

1. Procédé d'estimation et de codage hiérarchisé du mouvement de séquences d'images, consistant :

- à un premier niveau de partition, à découper l'image courante en macroblocs de $2^P.2^P$ pixels et à déterminer un premier champ de vecteurs-mouvement associés chacun à un macrobloc, en utilisant un algorithme d'estimation itératif et récursif initialisé par des vecteurs-mouvement estimés pour l'image précédente,
- puis un deuxième niveau, à découper en quadrants chacun des macroblocs et à déterminer, pour les blocs qui en résultent, un second champ de vecteurs-mouvement en utilisant le même algorithme d'estimation mais initialisé par des vecteurs du champ de mouvement estimés au niveau précédent,

- puis à $i^{ème}$ niveau , i = 3 à p, à découper chacun des blocs considérés au niveau i-1 en quadrants et à déterminer, pour les blocs qui en résultent, un $i^{ème}$ champ de vecteur-mouvement en utilisant le même algorithme d'estimation initialisé par des vecteurs du champ de mouvement estimés au niveau précédent,

- et en utilisant, comme critère de sélection, les différences de luminance entre blocs se correspondant dans les images successives par les vecteurs de déplacement estimés des p niveaux de partition, à déterminer sur la base des sommes desdites différences, pour chaque bloc retenu, un champ de vecteurs-mouvement final, caractérisé en ce que l'on affecte à chaque bloc du niveau de partition le plus élevé du champ de vecteurs-mouvement final, le vecteur-mouvement de l'un des p niveaux de partition entrant en ligne de compte pour ledit bloc qui bénéficie de la somme des carrés des différences inter-trames déplacées de luminance la plus faible.

2. Procédé selon la revendication 1, caractérisé en ce que l'algorithme d'estimation de mouvement utilisé est symétrique ou non symétrique et utilise pour la détermination d'un vecteur mouvement à un rang d'itération i, N vecteurs-mouvement déterminés à l'itération i-1 parmi lesquels on choisit le vecteur qui conduit à la minimisation du critère traduisant les différences inter-trames déplacées de luminance entre les blocs se correspondant dans les images successives par les vecteurs de déplacement estimés correspondants, le vecteur choisi étant corrigé en fonction du déplacement des pixels du bloc entre la trame courante et la trame précédente et/ou la trame suivante.

3. Procédé selon la revendication 1, caractérisé en ce que l'algorithme d'estimation de mouvement utilisé est symétrique ou non-symétrique et utilise pour la détermination d'un vecteur-mouvement à un rang d'itération i, N vecteurs-mouvement déterminés à l'itération i-1 corrigés en fonction du déplacement des pixels du bloc entre la trame courante et la trame précédente et/ou la trame suivante, le vecteur-mouvement choisi étant celui qui conduit à la minimisation du critère traduisant les différences inter-trames déplacées de luminance entre les blocs se correspondant dans les images successives par les vecteurs de déplacement estimés correspondants.

4. Procédé selon les revendications 2 ou 3, caractérisé en ce que la correction du vecteur-mouvement est réalisée en diminuant ledit vecteur d'une quantité fonction des différences de luminance intertrames déplacées, c'est à dire des sommes de différences de luminance entre les pixels du bloc courant et les pixels des blocs correspondant au bloc courant déplacés du vecteur-mouvement, respectivement dans la trame précédente et/ou dans la trame suivante de la séquence.

5. Procédé selon la revendication 4, caractérisé en ce que la correction du vecteur-mouvement est fonction des composantes horizontale et verticale des gradients de luminance calculés dans les trames précédentes et/ou suivantes.

6. Procédé selon la revendication 5, caractérisé en ce que le gradient est calculé en utilisant les quatre pixels ayant une position correspondant à des valeurs entières de x et y les plus proches du pixel déplacé et en appliquant les formules ci-après :

- si le pixel déplacé est dans le voisinage de I1 :
  Gx = (I2-I1)          Gy = (I1-I3)
- si le pixel déplacé est dans le voisinage de I2 :
  Gx = (I2-I1)          Gy = (I2-I4)
- si le pixel déplacé est dans le voisinage de I3
  Gx = (I4 - I3)          Gy = (I1 - I3)
- si le pixel déplacé est dans le voisinage de I4
  Gx = (I4 - I3) Gy = (I2 - I3)
- si le pixel déplacé est dans la partie médiane entre I1 et I3 ou I2 et I4
  Gx = ((I2 - I1) + (I4-I3))/2          Gy = (I1 - I3) ou (I2 - I4)
- si le plixel déplacé est dans la partie médiane entre I1 et I2 ou I4 et I3
  Gx = (I2 - I1) ou (I4-I3)          Gy = ((I1 - I3) + (I2 - I4))/2
- si le pixel déplacé est équidistant de I1, I2, I3, I4
  Gx = ((I2 - I1) + (I4 - I3))/2
  Gy = ((I1 - I3) + (I2 - I4))/2

7. Procédé selon les revendications 2 ou 3, caractérisé en ce que la correction du vecteur-mouvement est réalisée en effectuant une recherche du bloc d'image ayant la meilleure corrélation avec le bloc courant, à savoir un "block matching" en langue anglaise, sur une fenêtre limitée.

**8.** Procédé selon l'une quelconque des revendications 2 à 6, caractérisé en ce que, lorsque l'algorithme d'estimation de mouvement utilisé est non-symétrique, les différences de luminance entre blocs ainsi que les corrections sont calculées sur la trame précédente ou la trame suivante et mises à zéro ou à la même valeur pour l'autre trame.

**9.** Procédé selon l'une quelconque des revendications 1 à 4, caractérisé en ce que, à la première étape, pour chaque macroblocs, l'algorithme d'estimation de mouvement est mis en oeuvre N fois, initialisé par les N vecteurs-mouvement les plus occurents dans le même macrobloc de l'image précédente.

**10.** Procédé selon la revendication 7, caractérisé en ce que, pour la première image traitée, les N vecteurs-mouvement d'initialisation sont à zéro.

**11.** Procédé selon l'une quelconque des revendications 1 à 8. caractérisé en ce que de plus, on homogénéïse le champ de vecteurs-mouvement final en éliminant du champ de vecteurs-mouvement final les vecteurs les moins fréquents et en les remplaçant par les vecteurs les plus proches, de fréquence plus grande.

**Claims**

**1.** Method of estimation and of hierarchised coding of the motion of image sequences, consisting:

- at a first level of division, in partitioning the current image into macroblocks of $2^p.2^p$ pixels and in determining a first field of motion-vectors, each vector associated with a macroblock, by using an iterative and recursive estimation algorithm initialised with motion vectors estimated for the previous image,
- then a second level, in partitioning each of the macroblocks into quadrants and in determining, for the blocks which result therefrom, a second motion-vector field by using the same estimation algorithm but initialised with vectors from the field of motion which were estimated at the previous level,
- then at $i^{th}$ level, i = 3 to p, in partitioning each of the blocks considered at level i-1 into quadrants and in determining, for the blocks which result therefrom, an $i^{th}$ motion-vector field by using the same estimation algorithm initialised with the vectors from the field of motion which were estimated at the previous level,
- and by using, as selection criterion, the differences in luminance between blocks corresponding in the successive images through the estimated displacement vectors of the p levels of division, in determining on the basis of the sums of the said differences, for each block retained, a final motion-vector field,
  characterised in that each block of the highest level of division of the final motion-vector field is assigned the motion vector of one of the p levels of division taken into account for the said block which benefits from the smallest sum of the squares of the displaced interframe differences in luminance.

**2.** Method according to Claim 1, characterised in that the motion-estimation algorithm used is symmetric or non-symmetric and uses, for the determination of a motion vector at an iteration index i, N motion vectors determined at iteration i-1 amongst which is chosen the vector which leads to the minimisation of the criterion expressing the displaced interframe differences in luminance between the blocks corresponding in the successive images through the corresponding estimated displacement vectors, the vector chosen being corrected as a function of the displacement of the pixels of the block between the current frame and the previous frame and/or the next frame.

**3.** Method according to Claim 1, characterised in that the motion-estimation algorithm used is symmetric or non-symmetric and uses, for the determination of a motion vector at an iteration index i, N motion vectors determined at iteration i-1 and corrected as a function of the displacement of the pixels of the block between the current frame and the previous frame and/or the next frame, the motion vector chosen being that which leads to the minimisation of the criterion expressing the displaced interframe differences in luminance between the blocks corresponding in the successive images through the corresponding estimated displacement vectors.

**4.** Method according to Claims 2 or 3, characterised in that the correction of the motion vector is carried out by reducing the said vector by a quantity dependent on the displaced interframe differences in luminance, that is to say on the sums of differences in luminance between the pixels of the current block and the pixels of the blocks corresponding to the current block and displaced by the motion vector, in the previous frame and/or in the next frame respectively of the sequence.

**5.** Method according to Claim 4, characterised in that the correction of the motion vector is dependent on the horizontal and vertical components of the luminance gradients calculated in the previous and/or following frames.

6. Method according to Claim 5, characterised in that the gradient is calculated using the four pixels having a position corresponding to integer values of x and y which are closest to the displaced pixel and by applying the formulae below:

- if the displaced pixel is in the neighbourhood of I1
  Gx = (I2 - I1)      Gy = (I1 - I3)
- if the displaced pixel is in the neighbourhood of I2
  Gx = (I2 - I1)      Gy = (I2 - I4)
- if the displaced pixel is in the neighbourhood of I3
  Gx = (I4 - I3)      Gy = (I1 - I3)
- if the displaced pixel is in the neighbourhood of I4
  Gx = (I4 - I3)      Gy = (I2 - I4)
- if the displaced pixel is in the middle portion between I1 and I3 or I2 and I4
  Gx = ((I2 - I1) + (I4 - I3))/2 Gy = (I1 - I3) or (I2 - I4)
- if the displaced pixel is in the middle portion between I1 and I2 or I4 and I3
  Gx = (I2 - I1) or (I4 - I3) Gy = ((I1 - I3) + (I2 - I4))/2
- if the displaced pixel is equidistant from I1, I2, I3, I4
  Gx = ((I2 - I1) + (I4 - I3))/2
  Gy = ((I1 - I3) + (I2 - I4))/2

7. Method according to Claims 2 or 3, characterised in that the correction of the motion vector is carried out by searching for the image block which has the best correlation with the current block over a limited window.

8. Method according to any one of Claims 2 to 6, characterised in that, when the motion-estimation algorithm used is non-symmetric, the differences in luminance between blocks as well as the corrections are calculated over the previous frame or the next frame and are set to zero or to the same value for the other frame.

9. Method according to any one of Claims 1 to 4, characterised in that, in the first step, for each macroblock, the motion-estimation algorithm is employed N times, initialised with the N motion vectors occurring most in the same macroblock of the previous image.

10. Method according to Claim 7, characterised in that, for the first processed image, the N initialising motion vectors are zero.

11. Method according to any one of Claims 1 to 8, characterised in that moreover, the final motion-vector field is rendered homogeneous by eliminating from the final motion-vector field the least frequent vectors and by replacing them with the closest vectors, of larger frequency.

**Patentansprüche**

1. Verfahren zur Schätzung und hierarchischen Kodierung der Bewegung in Bildfolgen, enthaltend:

- eine erste Aufteilungsstufe zum Zerlegen des laufenden Bildes in Makroblöcke mit $2^p.2^p$ Pixeln und zum Bestimmen eines ersten Feldes von je einem Makroblock zugeordneten Bewegungsvektoren durch Anwendung eines iterativen und rekursiven Schätzalgorithmus, der durch die für das vorangehende Bild geschätzten Bewegungsvektoren ausgelöst wird,
- dann eine zweite Stufe zum Zerlegen jedes der Makroblöcke in Quadranten und zum Bestimmen eines zweiten Feldes von Bewegungsvektoren für die daraus resultierenden Blöcke durch Anwendung desselben Schätzalgorithmus, jedoch ausgelöst durch die bei der vorangehenden Stufe geschätzten Bewegungsvektoren des Feldes,
- dann eine i-te Stufe, i = 3 bis p, zum Zerlegen jedes der bei der Stufe i-1 betrachteten Blöcke in Quadranten und Ermitteln eines i-ten Feldes von Bewegungsvektoren für die daraus resultierenden Blöcke durch Anwendung desselben Schätzalgorithmus, der durch bei der vorangehenden Stufe geschätzte Bewegungsvektoren des Feldes ausgelöst wird,
- und Anwendung der Luminanzdifferenzen zwischen den den darauffolgenden Bildern entsprechenden Blökken durch die bei den p Stufen der Zerlegung geschätzten Verschiebevektoren als Auswahlkriterlum, um auf der Basis der Summen dieser Differenzen für jeden zurückgehaltenen Block ein endgültiges Feld von Bewegungsvektoren zu bestimmen,

dadurch gekennzeichnet, daß jedem Block der höchsten Aufteilungsstufe des endgültigen Bewegungsvektor-Feldes der Bewegungsvektor einer der p Aufteilungsstufen zugeordnet wird, die für den Block in Betracht gezogen werden, der auf der kleinsten Summe der Quadrate der verschobenen Luminanzdifferenzen zwischen den Halbbildem beruht.

2. Verfahren nach Anspruch 1, dadurch gekennzeichnet, daß der angewendete Algorithmus für die Bewegungsschätzung symmetrisch oder unsymmetrisch ist und für die Ermittlung eines Bewegungsvektors bei einem Iterationsindex i N Bewegungsvektoren verwendet, die bei der Iteration i-1 bestimmt werden, unter denen der Vektor ausgewählt wird, der zu der Minimierung des Kriteriums führt, das die Inter-Halbbild-Luminanzdifferenzen zwischen den entsprechenden Blöcken in den folgenden Bildern durch die entsprechenden geschätzten Verschiebevektoren ausdrückt, und daß der ausgewählte Vektor in Abhängigkeit von der Verschiebung der Pixel des Blocks zwischen dem laufenden Halbbild und dem vorangehenden Halbbild und/oder dem nächsten korrigiert wird.

3. Verfahren nach Anspruch 1, dadurch gekennzeichnet, daß der angewendete Algorithmus für die Bewegungsschätzung symmetrisch oder unsymmetrisch ist und für die Ermittlung eines Bewegungsvektors bei einem Iterationsindex i N Bewegungsvektoren anwendet, die bei der Iteration i-1 ermittelt und in Abhängigkeit der Verschiebung der Pixel des Blocks zwischen dem laufenden Halbbild und dem vorangehenden Halbbild und/oder dem nächsten Halbbild korrigiert werden, und daß der ausgewählte Bewegungsvektor derjenige ist, der zu der Minimierung des Kriteriums führt, das die Inter-Halbbild-Luminanzdifferenzen zwischen den entsprechenden Blöcken in den aufeinanderfolgenden Bildern durch die entsprechenden, geschätzten Verschiebevektoren ausdrückt.

4. Verfahren nach Anspruch 2 oder 3, dadurch gekennzeichnet, daß die Korrektur des Bewegungsvektors durch Verringerung des Vektors um eine Menge erfolgt, die von den verschobenen Luminanzdifferenzen zwischen den Halbbildern abhängig ist, das heißt von der Summe der Luminanzdifferenzen zwischen den Pixeln des laufenden Blocks und den Pixeln des Blocks, der zu dem laufenden Block gehört und durch den Bewegungsvektor in dem vorangehenden Halbbild und/oder in dem nächsten Halbbild der Folge wiedergegeben wird.

5. Verfahren nach Anspruch 4, dadurch gekennzeichnet, daß die Korrektur des Bewegungsvektors von den horizontalen und vertikalen Komponenten der Luminanzgradienten abhängig ist, die in den vorangehenden und/oder den folgenden Halbbildern berechnet werden.

6. Verfahren nach Anspruch 5, dadurch gekennzeichnet, daß der Gradient unter Anwendung der vier Pixel mit einer Lage, die den ganzzahligen Werten von x und y entspricht, die dem verschobenen Pixel am nächsten liegen, und durch Anwendung der folgenden Gleichungen berechnet wird:

- wenn das verschobene Pixel in der Nähe von I1 liegt:
  $Gx = (I2-I1)$          $Gy = (I1-I3)$
- wenn das verschobene Pixel in der Nähe von I2 liegt:
  $Gx=(I2-I1)$          $Gy = (I2-I4)$
- wenn das verschobene Pixel in der nähe von I3 liegt:
  $Gx = (I4-I3)$          $Gy = (I1-I3)$
- wenn das verschobene Pixel in der Nähe von I4 liegt:
  $Gx = (I4-I3)$          $Gy = (I2-I4)$
- wenn das verschobene in dem mittleren Teil zwischen I1 und I3 oder I2 und I4 liegt:
  $Gx = ((I2-I1) + (I4-I3))/2$          $Gy = (I1-I3)$ oder $(I2-I4)$
- wenn das verschobene Pixel in dem mittleren Teil zwischen I1 und I2 oder I4 und I3 liegt:
  $Gx = (I2-I1)$ oder $(I4-I3)$          $Gy = ((I1-I3) + (I2-I4))/2$
- wenn das verschobene Pixel den gleichen Abstand von I1, I2, I3, I4 aufweist:
  $Gx = ((I2-I1) + (I4-I3))/2$
  $Gy = ((I1-I3) + (I2-I4))/2$

7. Verfahren nach Anspruch 2 oder 3 , dadurch gekennzeichnet, daß die Korrektur des Bewegungsvektors durch eine Untersuchung des Bildblocks mit der besten Übereinstimmung mit dem laufenden Block, nämlich einem sogenanntem "block matching" in der englischen Sprache, über ein begrenztes Fenster erfolgt.

8. Verfahren nach einem der Ansprüche 2 bis 6, dadurch gekennzeichnet, daß dann, wenn der angewendete Algorithmus für die Bewegungsschätzung unsymmetrisch ist, die Luminanzdifferenzen zwischen Blöcken sowie die Korrekturen über das vorangehende Halbbild oder das nächste Halbbild auf null oder denselben Wert wie für das andere Halbbild gesetzt werden.

9. Verfahren nach einem der Ansprüche 1 bis 4, dadurch gekennzeichnet, daß bei dem ersten Schritt für jeden Makroblock der Algorithmus für die Bewegungsschätzung N mal durchgeführt wird, ausgelöst durch die N Bewegungsvektoren, die am häufigsten in demselben Block des vorangehenden Bildes auftreten.

10. Verfahren nach Anspruch 7, dadurch gekennzeichnet, daß für das erste verarbeitete Bild die N Bewegungsvektoren für die Auslösung gleich null sind.

11. Verfahren nach einem der Ansprüche 1 bis 8, dadurch gekennzeichnet, daß außerdem das endgültige Feld der Bewegungsvektoren durch Beseitigung der am wenigsten häufigen Vektoren homogenisiert wird und daß sie durch die nächstliegenden Vektoren mit einer höheren Frequenz ersetzt werden.

FIG.1

FIG.3

FIG.4

● pixel possible
(précision = 1⁄4 pixel)

✖ pixel existant

FIG. 2

Début :
pour chaque bloc
128×128

Prédicteurs temporels

**ESTIMATION DE MOUVEMENT**

Niveau
suivant :
prédicteurs
spatiaux

Correction des prédicteurs
(spatiaux ou temporels):
-calculs DFD et gradients

**CONVERGENCE**

Bloc 8×8
suivant

Pour chaque bloc de taille minimale (8×8 pixels), on a :

DV128, DV64, DV32, DV16, DV8

DFD128 DFD64 DFD32 DFD16 DFD8

DVi      DFDi

Pour chaque bloc de taille minimale, choix
du vecteur DVi donnant la DFDi la plus faible

DVi pour chaque bloc 8×8
du bloc 128×128 courant

**SELECTION**

HISTOGRAMME :
13 vecteurs maximum
et Reassignation

DVi Final
par bloc 8×8 pixels

# FIG.5

Séquence d'images

M1 — Mémoire image (ou trame) suivante (t+1)

M2 — Mémoire image (ou trame) courante (t)

M3 — Mémoire image (ou trame) précédente (t-1)

$I1(t+1)$
$I2(t+1)$
$I3(t+1)$
$I4(t+1)$

$I(t)$

$I1(t-1)$
$I2(t-1)$
$I3(t-1)$
$I4(t-1)$

**1**

Calculs de :
$DFD^{i-1}(t+1), GRADx^{i-1}(t+1), GRADy^{i-1}(t+1)$
$A = DFD^{i-1}(t+1).SIGNE\ (GRADx^{i-1}(t+1))$
$B = DFD^{i-1}(t+1).SIGNE\ (GRADy^{i-1}(t+1))$

**2**

Calculs de :
$DFD^{i-1}(t-1), GRADx^{i-1}(t-1), GRADy^{i-1}(t-1)$
$C = DFD^{i-1}(t-1).SIGNE\ (GRADx^{i-1}(t-1))$
$D = DFD^{i-1}(t-1).SIGNE\ (GRADy^{i-1}(t-1))$

Dans le cas de plusieurs itérations $i = i + 1$

**3**

— Calcul des sommes sur le bloc :
$$\sum_{bloc}(C-A)\ ,\ \sum_{bloc}(D-B)$$
$$\sum_{bloc}|GRADx^{i-1}(t+1)| + |(GRADx^{i-1}(t-1)|$$
$$\sum_{bloc}|GRADy^{i-1}(t+1)| + |(GRADy^{i-1}(t-1)|$$
— Calcul de $Dx^i$ et $Dy^i$ : CORRECTION des prédicteurs $D^{i-1}$

— Calcul des sommes sur le bloc :
$$S^i = \sum_{bloc}(DFD^i(t+1) + DFD^i(t-1))^2$$

CRITÈRE DE DÉCISION A POSTÉRIORI :

Il choisit le déplacement $D^i$ qui parmi quatre donne le $S^i$ le plus faible (les quatre $D^i$ sont calculés en parallèle)

$D^i$ appartient au champ de mouvement

## FIG.6

Séquence d'images

| M1 | M2 | M3 |
|---|---|---|
| Mémoire image (ou trame) suivante (t+1) | Mémoire image (ou trame) courante (t) | Mémoire image (ou trame) précédente (t-1) |

$I1(t+1)$
$I2(t+1)$
$I3(t+1)$
$I4(t+1)$

$I(t)$

$I1(t-1)$
$I2(t-1)$
$I3(t-1)$
$I4(t-1)$

**1**

Calculs de :

$DFD^{i-1}(t+1), GRADx^{i-1}(t+1), GRADy^{i-1}(t+1)$

$A = DFD^{i-1}(t+1) . SIGNE (GRADx^{i-1}(t+1))$

$B = DFD^{i-1}(t+1) . SIGNE (GRADy^{i-1}(t+1))$

**2**

Calculs de :

$DFD^{i-1}(t-1), GRADx^{i-1}(t-1), GRADy^{i-1}(t-1)$

$C = DFD^{i-1}(t-1) . SIGNE (GRADx^{i-1}(t-1))$

$D = DFD^{i-1}(t-1) . SIGNE (GRADy^{i-1}(t-1))$

4 prédicteurs

**3'**

– Calcul des sommes sur chaque bloc 8×8 du bloc courant puis somme sur le bloc courant :

$$S^{i-1} = \sum_{bloc} \sum_{8 \times 8} (DFD^{i-1}(t+1) + DFD^{i-1}(t-1))^2$$

– Calcul des sommes sur le bloc courant :

$$\sum_{bloc} (C-A), \quad \sum_{bloc} (D-B)$$

$$\sum_{bloc} |GRADx^{i-1}(t+1)| + |GRADx^{i-1}(t-1)|$$

$$\sum_{bloc} |GRADy^{i-1}(t+1)| + |GRADy^{i-1}(t-1)|$$

– Calcul de $Dx^i$ et $Dy^i$ : CORRECTION des prédicteurs $D^{i-1}$

CRITÈRE DE DÉCISION A PRIORI :

Il choisit le déplacement $D^i$ qui parmi quatre donne le $S^{i-1}$ le plus faible (les quatre $D^i$ sont calculés en parallèle) et le $S^{i-1}$ est calculé sur les prédicteurs.

$D^i$ appartient au champ de mouvement

# FIG.7